# FASCICULE DE BREVET EUROPEEN

(11) **EP 4 352 305 B1**
(45) Date de publication et mention de la délivrance du brevet: **06.08.2025**
(21) Numéro de dépôt: 22727962.7
(22) Date de dépôt: 03.05.2022
(51) Int. Cl.: E01F 9/529, G06V 20/56, B60G 17/00, B60W 60/00, B60W 30/12, B60W 30/14, B60W 50/14

(54) **PROCÉDÉ ET DISPOSITIF DE DÉSACTIVATION DE SYSTÈME D'AIDE À LA CONDUITE**
VERFAHREN UND VORRICHTUNG ZUR DEAKTIVIERUNG VON FAHRASSISTENZSYSTEMEN
METHOD AND DEVICE FOR DEACTIVATING DRIVING ASSISTANCE SYSTEMS

(30) Priorité: 07.06.2021 FR 2105945
(43) Date de publication de la demande: 17.04.2024
(73) Titulaire: Stellantis Auto SAS, 78300 Poissy (FR)
(72) Inventeur: ABBOUBI, Soukaina, Settat, 26000 (MA); ATTIA, Rachid, 78000 VERSAILLES (FR); ET THAQFY, Yassine, Casablanca, 20620 (MA); HAMDI, Nadia, Casablanca, 20300 (MA)
(74) Mandataire: ESIP
(86) Numéro de dépôt international: PCT/FR2022/050847
(87) Numéro de publication internationale: WO 2022/258896

(56) Documents cités:
- DE-A1- 102012 017 569
- DE-A1- 102019 213 850
- US-A1- 2019 092 338

## Description

La présente invention revendique la priorité de la demande française 2105945 déposée le 07.06.2021.

### Domaine technique

La présente invention concerne les procédés et dispositifs de systèmes d'aide à la conduite. La présente invention concerne également un procédé et un dispositif de désactivation d'au moins un système d'aide à la conduite d'un véhicule, notamment un véhicule autonome.

### Arrière-plan technologique

La sécurité routière fait partie des enjeux importants de nos sociétés. Avec l'augmentation du nombre de véhicules circulant sur les réseaux routiers du monde entier, et ce quelle que soient les conditions de circulation, les risques d'accidents et d'incidents provoqués par les conditions de circulation n'ont jamais été aussi importants.

Pour améliorer la sécurité routière, certains véhicules contemporains sont équipés de fonctions ou systèmes d'aide à la conduite, dits ADAS (de l'anglais « Advanced Driver-Assistance System » ou en français « Système d'aide à la conduite avancé »). Des systèmes ADAS mettent par exemple en œuvre des procédés basés sur la détection d'obstacles environnants à l'aide de capteurs périphériques embarqués sur un véhicule tels que des caméras, radars, ou encore lidars (de l'anglais « Light Detection And Ranging », ou « Détection et estimation de la distance par la lumière » en français).

Les systèmes ADAS peuvent également tenir compte de données de navigation indiquant en avance les caractéristiques d'une route, notamment les limitations de vitesse, les côtes ou encore le rayon de courbure des virages sur le parcours, de façon à optimiser en avance la conduite du véhicule.

L'automatisation croissante de la conduite des véhicules amène également à la conception de véhicules autonomes, c'est-à-dire de véhicules dont la conduite est, au moins en partie, gérée par un ou plusieurs systèmes automatiques. Le niveau d'autonomie d'un véhicule autonome est par exemple compris entre 0 et 5 (0 pour un véhicule n'ayant aucune autonomie et dont la conduite est sous la supervision totale du conducteur et 5 pour un véhicule totalement autonome).

Les 5 niveaux d'autonomie de la classification de l'agence fédérale chargée de la sécurité routière sont :
- niveau 0 : aucune automatisation, le conducteur du véhicule contrôle totalement les fonctions principales du véhicule (moteur, accélérateur, direction, freins) ;
- niveau 1 : assistance au conducteur, l'automatisation est active pour certaines fonctions du véhicule, le conducteur gardant un contrôle global sur la conduite du véhicule ; le régulateur de vitesse fait partie de ce niveau, comme d'autres aides telles que l'ABS (système antiblocage des roues) ou l'ESP (électro-stabilisateur programmé) ;
- niveau 2 : automatisation de fonctions combinées, le contrôle d'au moins deux fonctions principales est combiné dans l'automatisation pour remplacer le conducteur dans certaines situations ; par exemple, le régulateur de vitesse adaptatif combiné avec le centrage sur la voie permet à un véhicule d'être classé niveau 2, tout comme l'aide au stationnement (de l'anglais « Park assist ») automatique ;
- niveau 3 : conduite autonome limitée, le conducteur peut céder le contrôle complet du véhicule au système automatisé qui sera alors en charge des fonctions critiques de sécurité ; la conduite autonome ne peut cependant avoir lieu que dans certaines conditions environnementales et de trafic déterminées (uniquement sur autoroute par exemple) ;
- niveau 4 : conduite autonome complète sous conditions, le véhicule est conçu pour assurer seul l'ensemble des fonctions critiques de sécurité sur un trajet complet ; le conducteur fournit une destination ou des consignes de navigation mais n'est pas tenu de se rendre disponible pour reprendre le contrôle du véhicule ;
- niveau 5 : conduite complètement autonome sans l'aide de conducteur dans toutes les circonstances.

La classification de l'organisation internationale des constructeurs automobiles est semblable à celle listée ci-dessus, à la différence près qu'elle comporte 6 niveaux, le niveau 3 de la classification américaine étant divisé en 2 niveaux dans celle de l'organisation internationale des constructeurs automobiles.

Lorsqu'un véhicule a une autonomie de niveau 3, la conduite automatisée est possible dans certaines conditions, notamment de perception des capteurs du véhicule. Si l'une des conditions n'est plus réalisée, le véhicule autonome rend la main au conducteur dans un délai suffisant qui peut alors reprendre le contrôle du véhicule.

De manière similaire, certaines fonctionnalités d'un système ADAS, par exemple d'un véhicule ayant une autonomie de niveau 1 ou 2, sont uniquement compatibles avec des portions de route spécifiques.

Parmi les facteurs qui peuvent rendre une portion de route incompatible avec la conduite en mode autonome ou l'activation de certaines fonctionnalités d'un système ADAS, on dénombre par exemple la présence de travaux, d'aménagements routiers, de passages piétons, de virages serrés, de péages ou encore de ronds-points dangereux. De telles zones sont par exemple indiquées en avance par des panneaux de signalisation ou par des données cartographiques.

La détection de ces zones est ainsi dépendante de la capacité d'un véhicule à détecter et identifier les panneaux de signalisation, laquelle peut être altérée d'une pluralité de façons, notamment selon les conditions de luminosité, de circulation, la qualité et l'entretien de l'infrastructure. La détection de zones de péage est en particulier complexifiée par l'élargissement des voies de circulation, limitant les possibilités de localisation des panneaux. De la même manière, l'enregistrement de ces zones dans des données cartographiques, par exemple à l'intérieur d'une base de données en communication avec le véhicule, dépend de la maintenance de ces données cartographiques.

Le document US 2019/0092338 A1 est par ailleurs connu et divulgue un dispositif de commande d'une quantité de vibration transmise comprend un détecteur d'état de commande, un détecteur d'état de surface de la route et au moins une unité de commande de quantité de vibration transmise comprenant un moyen de transmission qui transmet des informations représentant un état de surface de la route à un conducteur, et un moyen de commande de quantité de vibration transmise provoquée par une irrégularité de surface de la route.

Le Demandeur soumet par conséquent que les procédés et dispositifs permettant au conducteur de reprendre en main le contrôle d'un véhicule autonome ou semi-autonome restent largement perfectibles.

### Résumé de l'invention

Un objet de la présente invention est de remédier aux limitations ci-dessus.

Un autre objet de la présente invention est de proposer un procédé de désactivation de système d'aide à la conduite permettant de détecter les zones non appropriées à la conduite autonome ou semi-autonome sans dépendre de la signalisation ni de la cartographie.

Selon un premier aspect, la présente invention concerne un procédé de désactivation d'au moins un système d'aide à la conduite d'un véhicule, le procédé étant mis en œuvre par au moins un processeur, le procédé comprenant les étapes suivantes :
- réception de premières informations représentatives d'un profil vertical de route depuis un ensemble de capteurs intégrés au véhicule ;
- obtention de deuxièmes informations représentatives d'une présence de bandes rugueuses en fonction des premières informations;
- comparaison de ladite valeur avec une valeur seuil; et
- désactivation de l'au moins un système d'aide à la conduite en fonction des deuxièmes informations et de ladite comparaison, lesdites deuxièmes informations comprenant une valeur représentative d'un nombre de bandes rugueuses (11).

Selon une variante, ledit au moins un système d'aide à la conduite est désactivé lorsque ladite valeur est supérieure à ladite valeur seuil.

Selon une autre variante, le procédé comprend en outre une étape de rendu d'une requête de reprise en main du véhicule en fonction des deuxièmes informations, l'étape de désactivation se déclenchant en outre en fonction d'une réponse à la requête reçue depuis une interface homme-machine.

De préférence, l'étape de rendu comprend en outre un contrôle de vitesse du véhicule.

Selon une variante supplémentaire, le système d'aide à la conduite appartient à un ensemble de systèmes comprenant :
- un système de régulation adaptative de vitesse du véhicule ; et
- un système d'adaptation intelligente de vitesse du véhicule ; et
- un système d'aide au positionnement du véhicule dans une file de circulation ; et
- un système de changement automatique de file de circulation ; et
- un système de conduite en mode autonome du véhicule.

Selon encore une variante, l'ensemble de capteurs comprend au moins une caméra associée à un système de suspension du véhicule.

Selon une variante additionnelle, le procédé comprend en outre une étape de transmission des deuxièmes informations à destination d'un serveur distant.

Selon un deuxième aspect, la présente invention concerne un dispositif de désactivation de système d'aide à la conduite, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect non revendiqué, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 3 annexées, sur lesquelles :
[Fig. 1] illustre schématiquement un véhicule circulant dans un environnement routier, selon un exemple de réalisation particulier et non limitatif de la présente invention ;
[Fig. 2] illustre schématiquement un dispositif configuré pour désactiver au moins un système d'aide à la conduite du véhicule de la figure 1, selon un exemple de réalisation particulier et non limitatif de la présente invention ;
[Fig. 3] illustre un organigramme des différentes étapes d'un procédé de désactivation d'au moins un système d'aide à la conduite du véhicule de la figure 1, selon un exemple de réalisation particulier et non limitatif de la présente invention.

### Description des exemples de réalisation

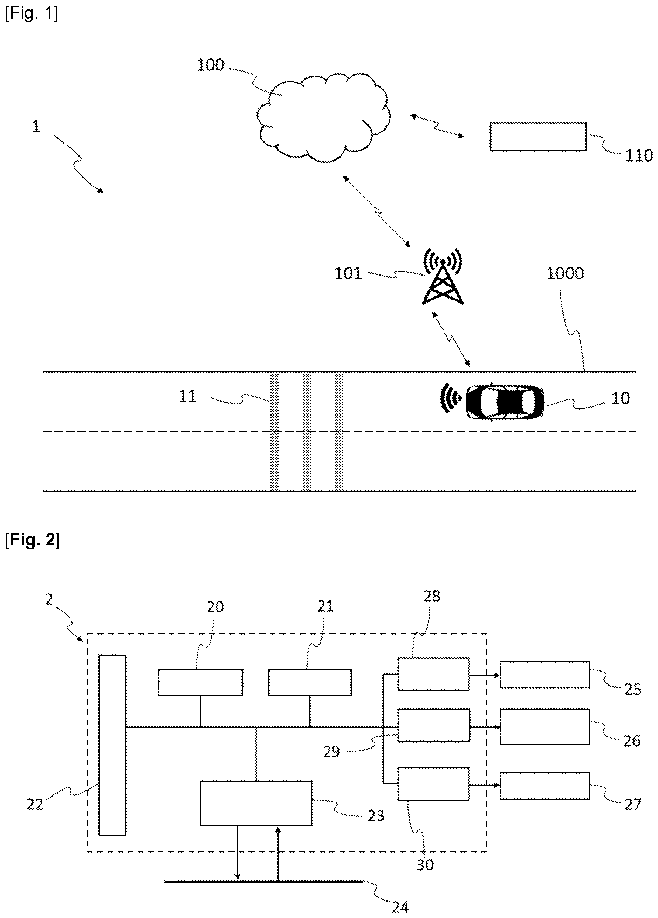

Un procédé et un dispositif de désactivation d'au moins un système d'aide à la conduite d'un véhicule vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de la présente invention, un procédé de désactivation d'au moins un système d'aide à la conduite d'un véhicule comprend la réception, par un processeur embarqué du véhicule, de premières informations représentatives d'un profil vertical de route, c'est-à-dire d'un profil de l'élévation de la route, depuis un ensemble de capteurs intégrés au véhicule. Les premières informations comprennent par exemple des valeurs de hauteur du profil vertical de route devant le véhicule, collectées selon un ou plusieurs angles de capture ou encore au cours d'une période donnée.

En fonction des premières informations, le processeur obtient des deuxièmes informations représentatives d'une présence de bandes rugueuses, c'est-à-dire de bandes transversales surélevées intimant un ralentissement du véhicule, par exemple à l'approche d'un péage ou de tout autre aménagement routier.

Le processeur désactive alors l'au moins un système d'aide à la conduite en fonction des deuxièmes informations, par exemple une ou plusieurs fonctionnalités d'un système ADAS du véhicule, les fonctionnalités étant adaptées uniquement à la conduite sur des portions de routes prédéfinies, la présence de bandes rugueuses indiquant que la portion de route à venir n'est pas nécessairement compatible avec l'emploi de tels systèmes d'aide à la conduite, par exemple avec une conduite en mode autonome ou semi-autonome.

La désactivation de systèmes d'aide à la conduite en fonction d'une présence de bandes rugueuses permet ainsi de fournir un moyen additionnel de détecter les changements de portions de routes et en particulier les portions de route non adaptées à l'emploi de certains systèmes d'aide à la conduite, en complément d'autres moyens faillibles ou incomplets tels que la détection de panneaux et/ou l'emploi de données cartographiques.

[Fig. 1] illustre schématiquement un environnement routier 1 dans lequel évolue un véhicule 10, selon un exemple de réalisation particulier et non limitatif de la présente invention.

La figure 1 illustre un véhicule 10, par exemple un véhicule automobile, circulant sur une voie de circulation 1000. Selon d'autres exemples, le véhicule 10 correspond à un car, un bus, un camion ou une motocyclette, c'est-à-dire un véhicule de type terrestre motorisé.

En accord avec le concept sous-jacent de l'invention, le véhicule 10 embarque au moins un système d'aide à la conduite, dit ADAS, permettant de conduire le véhicule 10 de manière autonome ou semi autonome, en particulier selon un niveau de conduite autonome compris entre 1 et 3. Un ou plusieurs de ces systèmes ADAS sont uniquement compatibles avec des portions de route spécifiques, par exemple uniquement sur autoroute ou hors de zones de danger. Les systèmes ADAS sont par exemple respectivement associés à des calculateurs périphériques embarqués dans le véhicule 10 et configuré pour commander les systèmes ADAS dans les conditions appropriées, par exemple en fonction de données cartographiques indiquant une variété de portions de route compatibles ou non avec chaque système ADAS.

Dans une première opération, au moins un processeur du véhicule 10, par exemple un calculateur central ou un ensemble de calculateurs, reçoit des premières informations représentatives d'un profil vertical de route depuis un ensemble de capteurs intégrés au véhicule 10.

L'au moins un processeur comprend par exemple un boîtier de servitude intelligent ou BSI (en anglais « Built-In Systems Interface ») ou encore un VSM (de l'anglais « Vehicle Supervisor Module » ou en français « Module de Supervision de Véhicule ») apte à former un réseau de communication, par exemple un réseau de communication multiplexé, dans lequel des données sont transmises via une liaison sans fil ou filaire, par exemple des données reçues de capteurs embarqués. L'au moins un processeur ou BSI (ci-après désigné « BSI ») est ainsi relié à une pluralité de calculateurs périphériques, par exemple aux calculateurs périphériques associés aux systèmes ADAS embarqués du véhicule 10 et/ou à d'autres calculateurs de systèmes embarqués du véhicule 10.

Le BSI reçoit ainsi les premières informations par communication dans le réseau de communication multiplexé, permettant par exemple de caractériser l'évolution de la voie de circulation 1000 au cours du trajet du véhicule 10. Les premières informations sont par exemple générées à partir d'une donnée représentative de l'environnement routier 1, par exemple une donnée obtenue par un ou plusieurs capteurs de système(s) de détection d'objet embarqués dans le véhicule 10, ce ou ces systèmes faisant par exemple partie d'un système ADAS du véhicule 10.

A titre d'exemple, le ou les capteurs associés à ces systèmes de détection d'objet correspondent à un ou plusieurs des capteurs suivants :
- un ou plusieurs radars à ondes millimétriques arrangés sur le véhicule 10, par exemple à l'avant, à l'arrière, sur chaque coin avant/arrière du véhicule 10 ; chaque radar étant adapté pour émettre des ondes électromagnétiques et pour recevoir les échos de ces ondes renvoyées par un ou plusieurs objets, dans le but de détecter des obstacles et leurs distances vis-à-vis du véhicule 10 ; et/ou
- un ou plusieurs LIDAR(s), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du véhicule 10 se trouvant dans le champ de vision de la ou les caméras.

Selon une variante particulière, l'ensemble de capteurs comprend au moins une caméra associée à un système de suspension du véhicule 10, de façon à faciliter la caractérisation du profil vertical de route. Une telle caméra est par exemple intégrée à un système de suspension pilotée, aussi appelée suspension adaptative, employant par exemple les premières informations ou la donnée d'environnement routier 1 pour adapter l'amortissement du véhicule 10 au profil vertical de route. Cette caméra présente par exemple un angle de capture dimensionné en fonction de distances de sécurité sur une voie de circulation 1000 compatible avec les systèmes ADAS, par exemple sur autoroute, de manière à assurer la capture du profil vertical de route lors d'une circulation fluide. Cette caméra est par exemple arrangée à hauteur du système de suspension du véhicule 10.

Les données obtenues de ce ou ces capteurs varient selon le type de capteur. Lorsqu'il s'agit d'un radar ou d'un LIDAR, la donnée d'environnement routier 1 correspond par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, la donnée d'environnement routier 1 correspond à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »).

Les premières informations reçues par ces capteurs indiquent par exemple la position et la hauteur des éléments présents sur la voie de circulation 1000, permettant de constituer le profil vertical de route de la voie de circulation 1000, c'est-à-dire une valeur ou un ensemble de valeurs de hauteur ou d'amplitude mesurées à une distance donnée du véhicule 10, par exemple devant chacune des roues avant du véhicule 10.

En fonction des premières informations, le véhicule 10 obtient dans une deuxième opération des deuxièmes informations représentatives d'une présence de bandes rugueuses 11. Les bandes rugueuses 11 sont par exemple détectées individuellement par une variation de hauteur du profil vertical de route sur une distance donnée, cette variation étant par exemple comprise entre deux valeurs seuils permettant de la différencier d'irrégularités de la voie de circulation 1000 ou d'obstacles plus importants, et correspondant par exemple à une « impulsion » sur le profil vertical de route. Selon une autre conception, les bandes rugueuses 11 sont détectées par une variation de hauteur du profil vertical de route à une distance donnée du véhicule 10 en fonction du temps, par exemple de manière rapportée à une vitesse du véhicule 10.

Le BSI désactive alors dans une troisième opération au moins un système d'aide à la conduite du véhicule 10 en fonction des deuxièmes informations. Le BSI transmet par exemple une donnée de désactivation à un ou plusieurs calculateurs périphériques, par exemple des calculateurs périphériques de systèmes ADAS du véhicule, chaque calculateur périphérique étant associé à au moins un système d'aide à la conduite à désactiver. Les systèmes ADAS à désactiver en fonction des deuxièmes informations, et les calculateurs associés, sont par exemple enregistrés dans une mémoire du BSI en tant que systèmes ADAS non compatibles avec certaines portions de route et appartiennent par exemple à un ensemble de systèmes comprenant :
- un système de régulation adaptative de vitesse du véhicule 10, dit ACC (de l'anglais « Adaptive Cruise Control » aussi appelé « radar de régulation de distance ») ; et
- un système d'adaptation intelligente de vitesse, dit ISA (de l'anglais « Intelligent Speed Assistance » ou « Intelligent Speed Adaptation ») ; et
- un système d'aide au positionnement du véhicule 10 dans une file de circulation, dit LPA (de l'anglais « Lane Positioning Assist ») ; et
- un système de changement automatique de file de circulation, dit SALC (de l'anglais « Semi-Automatic Lane Change ») ; et
- un système de conduite en mode autonome du véhicule 10, par exemple selon une autonomie de niveau 3, ou encore une pluralité de systèmes permettant par leur coopération une conduite en mode autonome du véhicule 10.

Selon l'invention, les deuxièmes informations comprennent une valeur représentative d'un nombre de bandes rugueuses 11, c'est-à-dire que le véhicule 10 détecte et comptabilise, par exemple au cours d'une période, une pluralité de bandes rugueuses 11 détectées. La valeur représentative est alors comparée à une valeur seuil, la troisième opération s'effectuant en outre en fonction de cette comparaison, par exemple lorsque la valeur comptabilisée est supérieure à une valeur seuil définie et enregistrée dans une mémoire du BSI, c'est-à-dire après détection d'un nombre donné de bandes rugueuses 11. Cette conception permet en particulier de limiter l'impact de faux positifs durant la deuxième opération, par exemple la fausse détection d'une bande rugueuse à partir d'une irrégularité de la voie de circulation 1000 et/ou de limitations des capteurs renvoyant les premières informations et/ou d'un paramétrage imprécis des valeurs seuils employés lors de la deuxième opération.

Selon encore une variante, le BSI reçoit les deuxièmes informations et génère une requête de reprise en main du véhicule 10, de manière à alerter le conducteur du véhicule 10 et lui permettre de valider sa disponibilité. Le BSI communique par exemple, à l'intérieur du réseau multiplexé, avec un système IHM (Interface Homme-Machine) embarqué ou encore un système IVI (de l'anglais « In-Vehicle Infotainment » ou en français « Infodivertissement embarqué »), le BSI communiquant par exemple à un superviseur du système IHM contrôlant une ou plusieurs interfaces du véhicule 10 parmi lesquelles un combiné et/ou un afficheur central du véhicule 10.

Le BSI transmet dans cet exemple des informations représentatives des deuxièmes informations au superviseur du système IHM, lequel effectue un rendu en fonction des informations représentatives. Selon le système IHM, le rendu correspond à un signal visuel, sonore ou encore haptique amenant le conducteur à confirmer ou infirmer sa reprise en main et/ou la présence des bandes rugueuses 11 et/ou une voie de circulation 1000 non adaptée aux systèmes d'aide à la conduite. Selon un autre exemple, le BSI communique avec une autre interface homme-machine embarquée dans le véhicule 10, par exemple un dispositif connecté embarqué dans le véhicule 10.

Le BSI reçoit alors de l'interface homme-machine une information représentative d'une réponse à la requête de reprise en main, la troisième opération s'effectuant en outre en fonction de cette réponse. Cette conception permet ainsi de maintenir autant que possible le fonctionnement des systèmes ADAS en l'attente du conducteur du véhicule 10 et d'éviter toute perte de contrôle du véhicule 10.

Optionnellement, le rendu de la requête de reprise en main est accompagné d'un contrôle de la vitesse du véhicule 10, par exemple un ralentissement ou maintien de vitesse associé à la détection des bandes rugueuses 11 ou encore une stabilisation du comportement du véhicule 10 avant la désactivation de systèmes ADAS. Le BSI transmet par exemple une commande à l'intérieur du réseau multiplexé à destination d'un système ACC, ISA, ou encore d'un autre système embarqué, permettant de limiter la vitesse du véhicule 10 pour son approche d'une zone potentiellement dangereuse ou de ralentissement.

Selon une autre variante, le BSI transmet les deuxièmes informations à destination d'un serveur distant 110, par exemple un serveur de données cartographiques associé à une base de données communautaire ou à un gestionnaire de route. Le BSI transmet par exemple ces deuxièmes informations à la suite de la troisième opération, par exemple après confirmation et/ou reprise en main du véhicule 10 par le conducteur. Cette opération permet par exemple de confirmer la présence d'un ralentissement en l'absence de panneaux de signalisation appropriés ou de signaler une irrégularité entre la voie de circulation 1000 et la cartographie la représentant.

Selon un exemple de réalisation, le véhicule 10 communique avantageusement avec le serveur distant 110 en utilisant un système de communication V2X, par exemple basé sur les standards 3GPP LTE-V (de l'anglais « Long-Term Evolution » ou en français « Evolution à long terme ») ou IEEE 802.11p de ITS G5. Dans un tel système de communication V2X, chaque véhicule embarque un nœud pour permettre une communication de véhicule à véhicule V2V (de l'anglais « vehicle-to-vehicle »), de véhicule à infrastructure V21 (de l'anglais « vehicle-to-infrastructure ») et/ou de véhicule à piéton V2P (de l'anglais « vehicle-to-pedestrian »), les piétons étant équipés de dispositifs mobiles (par exemple un téléphone intelligent (de l'anglais « Smartphone »)) configurés pour communiquer avec les véhicules.

L'infrastructure du réseau comprend par exemple un dispositif de communication 101, correspondant par exemple à une antenne d'un réseau cellulaire de type LTE 4G ou 5G ou à une UBR (« Unité Bord de Route »), chacune correspondant à un nœud du réseau, en plus des nœuds équipant les véhicules ou les piétons.

Selon un exemple particulier de réalisation, l'ensemble des nœuds (c'est-à-dire les dispositifs de communications associés au véhicule 10 et l'antenne ou UBR 101) du réseau forme par exemple un réseau sans fil ad hoc(aussi appelé WANET (de l'anglais « Wireless Ad Hoc Network ») ou MANET (de l'anglais « Mobile Ad Hoc Network »)), correspondant à un réseau sans fil décentralisé. Le réseau sans fil ad hoc correspond avantageusement à un réseau véhiculaire ad hoc (ou VANET, de l'anglais « Vehicular Ad hoc NETwork ») ou à un réseau véhiculaire ad hoc intelligent (ou InVANET, de l'anglais « Intelligent Vehicular Ad hoc NETwork »), aussi appelé réseau « GeoNetworking ». Dans un tel réseau, 2 véhicules ou plus embarquant chacun un nœud peuvent communiquer entre eux dans le cadre d'une communication véhicule à véhicule V2V (de l'anglais « vehicle-to-vehicle ») ; chaque véhicule peut communiquer avec l'infrastructure mise en place dans le cadre d'une communication véhicule à infrastructure V21 (de l'anglais « vehicle-to-infrastructure ») ; chaque véhicule peut communiquer avec un ou des piétons équipés de dispositifs mobiles (par exemple un téléphone intelligent (de l'anglais « Smartphone »)) dans le cadre d'une communication véhicule à piéton V2P (de l'anglais « vehicle-to-pedestrian »).

Le nœud correspondant à l'antenne (ou UBR) 101 est avantageusement relié au serveur distant 110 ou au « cloud » 100 via une connexion filaire et/ou sans fil. L'antenne ou UBR 101 peut ainsi faire office de relais entre le serveur distant 110 et/ou le « cloud » 100 et le véhicule 10.

Selon un autre exemple de réalisation, le véhicule 10 embarque un boîtier télématique autonome, dit BTA, en communication avec le BSI à l'intérieur du réseau multiplexé et permettant de communiquer avec le serveur distant 110 hors du réseau de communication V2X, par exemple un BTA 3G ou 4G permettant une communication sans fil à l'intérieur d'un réseau cellulaire de type LTE 4G. Le véhicule 10 communique par exemple avec le serveur distant 110 et/ou le cloud 100 via l'antenne ou UBR 101, via une autre antenne du réseau cellulaire de type LTE 4G en communication avec le serveur distant 110, ou encore directement avec le serveur distant 110.

La compatibilité de la voie de circulation 1000 avec le fonctionnement de systèmes ADAS du véhicule 10 est ainsi vérifiée d'une manière supplémentaire vis-à-vis des solutions connues, permettant de compléter et/ou de confirmer les informations reçues de données cartographiques et/ou d'un système TSR (de l'anglais « Traffic Sign Recognition » ou en français « Reconnaissance de panneaux de signalisation ») ou ETSR (de l'anglais « Extended Traffic Sign Recognition » ou en français « Reconnaissance étendue de panneaux de signalisation »), en exploitant autant que possible les données issues de capteurs embarqués du véhicule 10.

[Fig. 2] illustre schématiquement un dispositif 2 configuré pour désactiver au moins un système d'aide à la conduite d'un véhicule, selon un exemple de réalisation particulier et non limitatif de la présente invention. Le dispositif 2 correspond par exemple à un dispositif embarqué dans le véhicule 10, par exemple un calculateur. Le dispositif 2 est par exemple configuré pour transmettre et recevoir des données à l'intérieur d'un réseau de communication multiplexé.

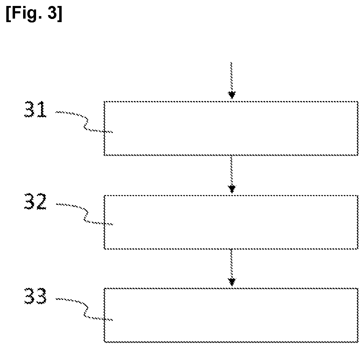

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 24. L'interface de communication 23 correspond par exemple à un transmetteur configuré pour transmettre et recevoir des informations et/ou des données via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage 25, tactile ou non, un ou des haut-parleurs 26 et/ou d'autres périphériques 27 (système de projection) via respectivement des interfaces de sortie 28, 29 et 30. Selon une variante, l'un ou l'autre des dispositifs externes est intégré au dispositif 2.

[Fig. 3] illustre un organigramme des différentes étapes d'un procédé de désactivation d'au moins un système d'aide à la conduite d'un véhicule, selon un exemple de réalisation particulier et non limitatif de la présente invention. Le procédé est par exemple mis en œuvre par un dispositif embarqué dans le véhicule 10 ou par le dispositif 2 de la figure 2.

Dans une première étape 31, des premières informations représentatives d'un profil vertical de route sont reçues par un processeur, depuis un ensemble de capteurs intégrés au véhicule.

Dans une deuxième étape 32, des deuxièmes informations représentatives d'une présence de bandes rugueuses sont obtenues en fonction des premières informations.

Dans une troisième étape 33, au moins un système d'aide à la conduite est désactivé en fonction des deuxièmes informations.

Selon une variante, les variantes et exemples des opérations décrits en relation avec la figure 1 s'appliquent aux étapes du procédé de la figure 3.

Bien entendu, la présente invention ne se limite pas aux exemples de réalisation décrits ci-avant mais s'étend à un procédé de désactivation d'au moins un système d'aide à la conduite qui inclurait des étapes secondaires en accord avec l'objet de la présente invention, défini par les revendications ci-jointes. II en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 2 de la figure 2.

## Revendications

1. Procédé de désactivation d'au moins un système d'aide à la conduite d'un véhicule (10), ledit procédé étant mis en œuvre par au moins un processeur, ledit procédé comprenant les étapes suivantes :
- réception (31) de premières informations représentatives d'un profil vertical de route depuis un ensemble de capteurs intégrés audit véhicule (10) ;
- obtention (32) de deuxièmes informations représentatives d'une présence de bandes rugueuses (11) en fonction desdites premières informations;
- comparaison de ladite valeur avec une valeur seuil ; et
- désactivation (33) dudit au moins un système d'aide à la conduite en fonction desdites deuxièmes informations et de ladite comparaison;
**caractérisé en ce que** lesdites deuxièmes informations comprennent une valeur représentative d'un nombre de bandes rugueuses (11).

2. Procédé selon la revendication 1, pour lequel ledit au moins un système d'aide à la conduite est désactivé lorsque ladite valeur est supérieure à ladite valeur seuil.

3. Procédé selon la revendication 1 ou 2, lequel comprend en outre une étape de rendu d'une requête de reprise en main dudit véhicule (10) en fonction desdites deuxièmes informations, ladite étape de désactivation (33) se déclenchant en outre en fonction d'une réponse à ladite requête reçue depuis une interface homme-machine.

4. Procédé selon la revendication 3, dans lequel ladite étape de rendu comprend en outre un contrôle de vitesse dudit véhicule (10).

5. Procédé selon l'une des revendications 1 à 4, dans lequel ledit système d'aide à la conduite appartient à un ensemble de systèmes comprenant
- un système de régulation adaptative de vitesse dudit véhicule (10) ; et
- un système d'adaptation intelligente de vitesse dudit véhicule (10) ; et
- un système d'aide au positionnement dudit véhicule (10) dans une file de circulation ; et
- un système de changement automatique de file de circulation ; et
- un système de conduite en mode autonome dudit véhicule (10).

6. Procédé selon l'une des revendications 1 à 5, dans lequel ledit ensemble de capteurs comprend au moins une caméra associée à un système de suspension dudit véhicule (10).

7. Procédé selon l'une des revendications 1 à 6, lequel comprend en outre une étape de transmission desdites deuxièmes informations à destination d'un serveur distant (110).

8. Programme d'ordinateur comportant des instructions pour la mise en œuvre du procédé selon l'une quelconque des revendications précédentes, lorsque ces instructions sont exécutées par un processeur.

9. Dispositif (2) de désactivation de système d'aide à la conduite, ledit dispositif (2) comprenant une mémoire (21) associée à au moins un processeur (20) configuré pour la mise en œuvre des étapes du procédé selon l'une quelconque des revendications 1 à 7.

10. Véhicule (10) comprenant le dispositif selon la revendication 9.

## Patentansprüche

1. Verfahren zur Deaktivierung mindestens eines Fahrerassistenzsystems (10), wobei das Verfahren durch mindestens einen Prozessor implementiert wird, wobei das Verfahren die folgenden Schritte umfasst:
- die ersten Informationen, die ein vertikales Straßenprofil repräsentieren, von einem in das Fahrzeug (10) integrierten Sensorsatz empfangen (31);
- Erlangung (32) zweiter Informationen, die für das Vorhandensein von aufgerauhten Streifen (11) repräsentativ sind, auf der Grundlage dieser ersten Informationen;
- Vergleich dieses Wertes mit einem Schwellenwert; und
- Deaktivierung (33) des mindestens einen Fahrerassistenzsystems in Abhängigkeit von der zweiten Information und dem Vergleich;
die zweite Information umfasst einen Wert, der eine Anzahl von aufgerauten Bändern (11) darstellt.

2. Verfahren nach Anspruch 1, bei dem das mindestens eine Fahrunterstützungssystem deaktiviert wird, wenn der Wert größer als der Schwellenwert ist.

3. Verfahren nach Anspruch 1 oder 2, das ferner einen Schritt des Wiedergebens einer Anforderung zum Zurücknehmen des Fahrzeugs (10) in Abhängigkeit von der zweiten Information umfasst, wobei der Deaktivierungsschritt (33) ferner in Abhängigkeit von einer Antwort auf die Anforderung ausgelöst wird, die von einer Mensch-Maschine-Schnittstelle empfangen wird.

4. Verfahren nach Anspruch 3, wobei der Schritt des Renderns ferner eine Geschwindigkeitssteuerung des Fahrzeugs (10) umfasst.

5. Verfahren nach einem der Ansprüche 1 bis 4, bei dem das Fahrerassistenzsystem zu einem Satz von Systemen gehört, der Folgendes umfasst:
- einem adaptiven Geschwindigkeitsregelsystem des Fahrzeugs (10) und
- ein intelligentes Geschwindigkeitsanpassungssystem des Fahrzeugs (10) und
- ein Positionierungs-Assistenzsystem für das Fahrzeug (10) in einer Fahrspur und
- ein automatisches Spurwechselsystem und
- ein autonomes Fahrsystem des Fahrzeugs (10).

6. Verfahren nach einem der Ansprüche 1 bis 5, bei dem die Sensoranordnung wenigstens eine Kamera umfasst, die einem Aufhängungssystem des Fahrzeugs (10) zugeordnet ist.

7. Verfahren nach einem der Ansprüche 1 bis 6, das des Weiteren einen Schritt des Sendens der zweiten Information zu einem entfernten Server (110) umfasst.

8. Computerprogramm mit Anweisungen zur Durchführung des Verfahrens nach einem der vorhergehenden Ansprüche, wenn diese Anweisungen von einem Prozessor ausgeführt werden.

9. Vorrichtung (2) zur Deaktivierung eines Fahrerassistenzsystems, wobei die Vorrichtung (2) einen Speicher (21) umfasst, der mindestens einem Prozessor (20) zugeordnet ist, der zur Durchführung der Schritte des Verfahrens nach einem der Ansprüche 1 bis 7 konfiguriert ist.

10. Fahrzeug (10), das die Vorrichtung nach Anspruch 9 umfasst.

## Claims

1. Method for deactivating at least one vehicle driver assistance system (10), said method being implemented by at least one processor, said method comprising the following steps:
- receipt (31) of first information representative of a vertical road profile from a set of sensors integrated into said vehicle (10);
- obtaining (32) second information representative of a presence of rough strips (11) according to said first information;
- comparison of that value with a threshold value; and
- deactivation (33) of said at least one driving aid system as a function of said second information and said comparison;
wherein said second information comprises a value representative of a quantity of rough strips (11).

2. Method according to claim 1, wherein said at least one driving aid system is deactivated when said value is greater than said threshold value.

3. Method according to claim 1 or 2, which further comprises a step of rendering a request for restart in the hand of said vehicle (10) as a function of said second information, said deactivation step (33) also being triggered as a function of a response to said request received from a man-machine interface.

4. Method according to claim 3, wherein said rendering step further comprises a speed control of said vehicle (10).

5. Method according to one of claims 1 to 4, in which the said driving aid system belongs to a set of systems comprising:
- an adaptive speed control system of said vehicle (10); and
- a system for intelligent speed adaptation of the said vehicle (10); and
- a system for aiding the positioning of the said vehicle (10) in a lane of circulation; and
- an automatic lane change system; and
an autonomous driving system of said vehicle (10).

6. Method according to one of claims 1 to 5, in which said set of sensors comprises at least one camera associated with a suspension system of said vehicle (10).

7. Method according to one of claims 1 to 6, which further comprises a step of transmission of said second information to a remote server (110).

8. A computer plan containing instructions for implementing the method according to any one of the previous claims, when these instructions are executed by a processor.

9. Device (2) for deactivating a driving aid system, said device (2) comprising a memory (21) associated with at least one processor (20) configured for implementing the steps of the method according to any one of claims 1 to 7.

10. Vehicle (10) comprising the device according to claim 9.
